# EUROPÄISCHE PATENTSCHRIFT

(11) **EP 0 896 488 B1**
(45) Veröffentlichungstag und Bekanntmachung des Hinweises auf die Patenterteilung: **14.08.2002**
(21) Anmeldenummer: 97113393.9
(22) Anmeldetag: 04.08.1997
(51) Int. Cl.: H04Q 7/32, H04B 7/185

(54) **Mobilfunkgerät sowie System zur Funkkommunikation unter Verwendung mindestens zweier Funksysteme**
Mobile radion communication device and system using at least two radio systems for communication
Appareil et système radio mobile pour la communication sans fil utilisant au moins deux réseaux radio

(43) Veröffentlichungstag der Anmeldung: 10.02.1999
(73) Patentinhaber: Dosch & Amand FreeHome GmbH & Co. KG, 81679 München (DE)
(72) Erfinder: Dosch, Franz A., 83026 Rosenheim (DE)
(74) Vertreter: Grünecker, Kinkeldey, Stockmair & Schwanhäusser Anwaltssozietät

(56) Entgegenhaltungen:
- WO-A-93/01689
- WO-A-94/21058
- GB-A- 2 241 850
- US-A- 5 490 284

## Beschreibung

Die vorliegende Erfindung betrifft ein Mobilfunkgerät sowie ein System zur Funkkommunikation unter Verwendung mindestens zweier Funkstanards.

Mobilfunksysteme, wie beispielsweise das GSM-System oder zukünftige satellitengestützte Systeme, ermöglichen entsprechenden Benutzern nahezu unbegrenzte Möglichkeiten zur mobilen Sprachkommunikation. Zunehmend an Bedeutung gewinnt in diesen Systemen auch die Datenkommunikation, wofür das Mobilfunkendgerät üblicherweise über ein Kabel mit dem entsprechenden Datenverarbeitungsgerät verbunden ist, das wiederum mit der für die Datenkommunikation notwendigen Hard- und Software ausgestattet ist.

Im privaten Bereich und Büros finden darüber hinaus schnurlose Telefonsysteme zunehmend Verbreitung, die sich im Gegensatz zu den oben angesprochenen globalen Systemen als lokale Mobilfunkdienste einordnen lassen. Beispiele für derartige Systeme sind DECT (Digital Enhanced Cordless Telecommunication), PHS (Personal Handy System), PWT (Personal Wireless Telecommunication), CT-1, CT-2 (Cordless Telefon) etc.

Um dem Benutzer den Umgang mit den angesprochenen Systemen zu erleichtern wurden sogenannte Dual-Mode-Geräte entwickelt, die sich wahlweise sowohl in einem lokalen Mobilfunkdienst, d.h. insbesondere zum schnurlosen Telefonieren im privaten Bereich als auch für globale Mobilfunkdienste, wie beispielsweise das GSM-System eignen.

GB-A-2 241 850 beschreibt eine technische Lösung, wie verhindert werden kann, dass unerwünschte Störungen auftreten, wenn ein Autotelefonsystem derart erweitert wird, dass der Fahrer ein Handgerät zur Verfügung hat, das ihm ermöglicht, während eines Gesprächs das Fahrzeug zu verlassen.

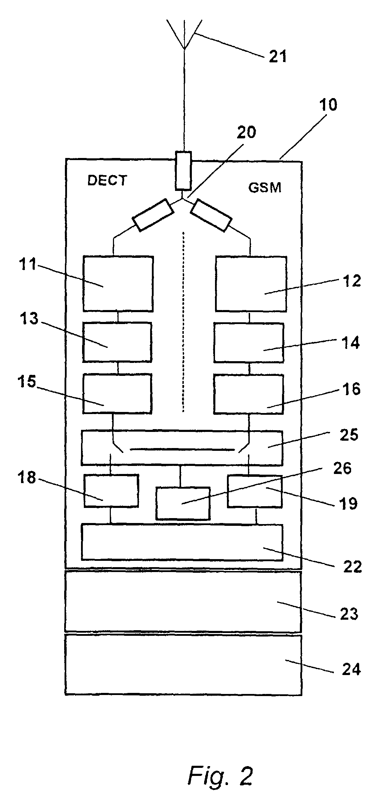

Wie anhand der Fig. 2 bis 9 ausführlich beschrieben, wird vorgeschlagen, diese Störungen durch geschickte Frequenz- und Zeitschlitzzuweisungen zu vermeiden.

Auf Seite 13 wird vorgeschlagen, die Kommunikation zwischen dem Fahrzeug und Handgerät mittels DECT abzuwickeln und für das Autotelefon an sich den GSM-Standard zu verwenden. Im letzten Abschnitt der Seite 13 wird darüber hinaus vorgeschlagen, Nicht-Funkstandards zu verwenden, wie Infrarot etc.

Es ist die Aufgabe der vorliegenden Erfindung, eine Lösung bereitzustellen, mit der eine kosteneffiziente Datenübertragung unter Verwendung zweier Funkstandards ermöglicht wird.

Diese Aufgabe wird gelöst durch ein Mobilfunkgerät gemäß Patentanspruch 1 sowie durch ein System gemäß Patentanspruch 12.

Bevorzugte Ausgestaltungen sind Gegenstand der Unteransprüche.

Im folgenden werden bevorzugte Ausführungsformen der vorliegenden Erfindung unter Bezugnahme auf die beiliegenden Zeichnungen näher erläutert. Dabei zeigen die Zeichnungen im einzelnen:
Fig. 1 eine Illustration einer Sytemkonfiguration gemäß einer bevorzugten Ausführungsform der vorliegenden Erfindung,
Fig. 2 eine schematische Illustration des Aufbaus einer bevorzugten Ausführungsform des erfindungsgemäßen Mobilfunkgeräts, und
Fig. 3 ein schematisches Blockschaltbild einer Umsetzungseinrichtung zur Verwendung in einem Mobilfunkgerät gemäß Fig. 2.

Der vorliegenden Erfindung liegt zunächst die Erkenntnis zugrunde, daß eine Ankopplung eines lokalen Mobilfunknetzes oder -dienstes, insbesondere eines schnurlosen Telefonsystems, wie beispielsweise DECT, PHS, PWT, CT-1, CT-2 etc. an ein globales Mobilfunknetz, wie beispielsweise GSM, PCM, Satellitensysteme, wie Inmarsat, LEOs etc. wünschenswert ist und sich mit geringem technischen Aufwand dadurch realisieren läßt, daß eine Umsetzungseinrichtung bereitgestellt wird, die die Signale im Standard des lokalen Mobilfunkdienstes empfängt, diese Signale intern in den für den globalen Mobilfunkdienst geeigneten Standard umsetzt und diese Signale als Funksignale gemäß dem Standard des globalen Mobilfunkdienstes ausstrahlt und empfangene Funksignale im Standard des globalen Mobilfunkdienstes umsetzt in Signale im Standard des lokalen Mobilfunkdienstes und diese Signale wiederum sendet.

Die Erfindung bezieht sich im besonderen auf die entsprechende Umsetzung von DECT-Signalen in GSM-Signale innerhalb der Umsetzungseinrichtung sowie auf die Umsetzung empfangener GSM-Signale in DECT-Signale.

Einen besonderen Aspekt der vorliegenden Erfindung stellt die Erkenntnis dar, daß die erwähnten Umsetzungseinrichtungen in einfacher Weise aus bereits bekannten und kostengünstig herzustellenden Dual-Mode-Handy's gebildet werden können. Wie im folgenden unter Bezugnahme auf die Fig. 2 noch näher erläutert wird, kann dies insbesondere dadurch erfolgen, daß der Signalpfad für den DECT-Standard mit dem Signalpfad für den GSM-Standard gekoppelt wird, so daß empfangene Signale des einen Standards zu den Signalverarbeitungseinheiten des Pfades für den anderen Standard durchgeschleift werden und von dem entsprechenden Pfad als Funksignale gemäß dem anderen Standard gesendet werden.

Im folgenden wird als lokaler Funkstandard der DECT-Standard angenommen und als globaler Funkstandard der GSM-Standard. Diese beispielhafte Angabe stellt keine Einschränkung für die Anwendung der vorliegenden Erfindung dar, sondern dient lediglich zur Vereinfachung der Beschreibung.

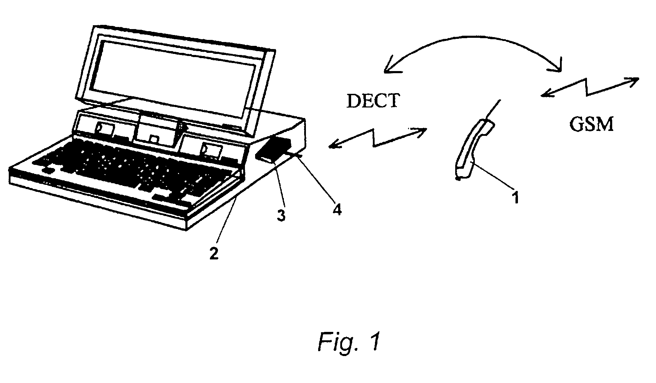

Fig. 1 zeigt eine Illustration einer bevorzugten Ausführungsform der vorliegenden Erfindung. Ein Dual-Mode-Telefonendgerät oder Handy 1, das in erfindungsgemäßer Weise so erweitert wurde, daß es einen besonderen Betriebszustand erlaubt, in dem empfangene Signale gemäß dem DECT-Standard in Signale gemäß dem GSM-Standard umgesetzt und abgestrahlt werden und in dem empfangene GSM-Signale in DECT-Signale umgesetzt und entsprechend abgestrahlt werden können.

Als Teilnehmereinheit im DECT-System ist ein Computer 2 gezeigt, der vorzugsweise aus einem mobilen Laptop besteht. Statt eins Computers 2 könnte selbstverständlich auch ein schnurloses Telefon für Sprachkommunikation verwendet werden. Der dargestellte Computer 2 weist eine spezielle Hardware 3 auf, die ihm die drahtlose Kommunikation im DECT-Standard ermöglicht. Die Hardware 3 besteht vorzugsweise aus einer PCMCIA-Karte, die die erforderliche Funktionalität bereitstellt. Vorzugsweise weist die PCMCIA-Karte selbst eine Antenne 4 auf, über die eine Funkkommunikation ermöglicht wird.

Der Kommunikationspartner innerhalb des GSM-Systems kann durch eine entsprechende Basisstation, einen Satelliten oder ein entsprechendes Mobilfunkendgerät oder Handy gebildet sein.

Obwohl die Verwendung eines erweiterten Dual-Mode-Mobilfunkendgeräts als Umsetzungseinrichtung aus Kostengründen besonders vorteilhaft erscheint, kann die Umsetzungseinrichtung 1 selbstverständlich auch aus einem eigens für diese Umsetzung geschaffenen Gerät bestehen, das nur den besonderen Betriebszustand, d.h. die Umsetzung von GSM-Signale in DECT-Signale und umgekehrt ermöglicht, jedoch selbst nicht als Telefon im DECT-System oder als Telefon im GSM-System verwendet werden kann.

Für den Fall, daß die Umsetzungseinrichtung 1 neben der bidirektionalen Umsetzung von einem Funk-Standard in den anderen und zurück auch als herkömmliche Mobilfunkeinheit sowohl in dem einen Standard als auch in dem anderen Standard verwendet werden kann und somit die erwähnte Dual-Mode-Funktion besitzt, ist das Gerät vorzugsweise mit einer Schaltung ausgerüstet, die eine automatische Erkennung des vorherrschenden Funkstandards ermöglicht, so daß der Benutzer die entsprechende Umschaltung des Geräts nicht manuell vornehmen muß, wenn er sich von dem einen Funkstandard in den anderen bewegt.

Aus hochfrequenztechnischen Gründen kann es bei Kombination bestimmter Funkstandards miteinander vorteilhaft sein, wenn die Umsetzungseinrichtung 1 für jeden Standard eine eigene Antenne aufweist.

Fig. 2 veranschaulicht den internen prinzipiellen Aufbau eines Dual-Mode-Mobilfunkgeräts, das gemäß der vorliegenden Erfindung erweitert wurde.

Das Mobilfunkgerät 10 weist einen Signalverarbeitungspfad für den GSM-Standard auf, der durch die Verarbeitungseinheiten 12, 14, 16 und 19 gebildet wird sowie einen Verarbeitungspfad für den DECT-Standard, welcher durch die Verarbeitungseinheiten 11, 13, 15 und 18 gebildet wird. Die beiden Signalverarbeitungspfade empfangen ihre Signale jeweils über eine gemeinsame Antenne 21, jedoch kann, wie oben erwähnt, eine eigene Antenne für jeden Signalverarbeitungspfad vorgesehen sein.

Die korrespondierenden Einheiten 11 und 12, 13 und 14, 15 und 16 sowie 18 und 19 stellen der Reihe nach HF-Sende- und Empfangseinheiten, Modulations- und Demodulationseinheiten, Signalverarbeitungseinheiten sowie Audiodatenverarbeitungseinheiten dar. Beide Pfade erhalten ihre Signale über ein Antennenkopplungsglied 20 von der gemeinsamen Antenne 21 und münden zum anderen Ende hin in einer gemeinsamen Audio-Ein/Ausgabe-Einheit 22. Das Gerät 10 kann über eine Anzeige-Bedieneinrichtung 23 gesteuert werden und wird vorzugsweise von einem Akku 24 mit Leistung versorgt.

Die erfindungsgemäße Funktionalität der Umsetzung empfangener Signale gemäß dem einen Standard in Signale gemäß dem anderen Standard wird durch das gestellte Durchschaltemodul 25 in Zusammenhang mit der Steuereinheit 26 gebildet. Wie angedeutet, wird durch das Durchschaltemodul eine Kopplung der beiden Pfade vorzugsweise an einer Verarbeitungsstufe bereitgestellt, an der noch keine Umsetzung empfangener Daten in Audiodaten erfolgt ist. Vorzugsweise werden von dem Durchschaltemodul 25 die Ausgänge der Signalverarbeitungseinheiten 15 und 16 gekoppelt. Wie erwähnt, erfolgt die Kopplung jedoch nur während einer Verwendung des Funkgeräts 10 im besonderen Betriebszustand und kann zur Verwendung des Mobilfunkgeräts als herkömmliches Endgerät unterdrückt werden. In diesem Falle werden bei Verwendung des Mobilfunkgeräts 10 innerhalb eines DECT-Systems die Signale des DECT-Pfades von der Einheit 15 an die Einheit 18 weitergeleitet (sowie umgekehrt), und entsprechend werden bei Verwendung des Mobilfunkgeräts in einem GSM-System die Signale der Einheit 16 an die Einheit 19 weitergeleitet (sowie umgekehrt). Eine Durchschleifung der Signale des einen Pfades an den anderen Pfad unterbleibt somit.

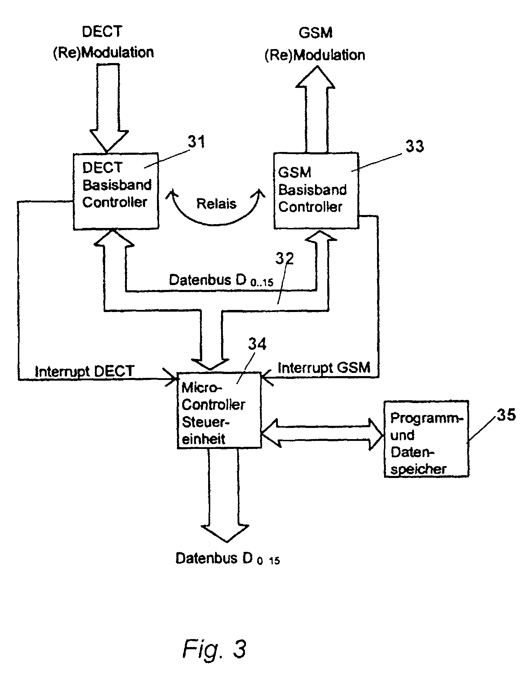

Fig. 3 zeigt eine bevorzugte Ausführungsform für den kombinierten Aufbau des Durchschaltemoduls 25 und der Steuereinheit 26. Ein DECT-Basisbandkontroller 31 ist über einen Datenbus 32 mit einem GSM-Basisbandkontroller 33 sowie mit einer Steuereinheit 34 verbunden. Im besonderen Betriebszustand, d.h. im Umsetzungsbetrieb, werden empfangene DECT-Signale vom Basisbandkontroller 31 an die Steuereinheit 34 weitergegeben und von dieser in Signale gemäß dem GSM-Standard umgesetzt und anschließend an den GSM-Basisbandkontroller 33 weitergeleitet. Ebenso werden vom GSM-Basisbandkontroller 33 bereitgestellte Signale von diesem an die Steuereinheit 34 weitergegeben und nach ihrer Umsetzung in Signale gemäß dem DECT-Standard an den DECT-Basisbandkontroller 31 weitergeleitet.

Die Steuereinheit 34 führt die Umsetzung mittels eines Mikrokontrollers durch, der gemäß einem in einem Speicher 35 gespeicherten Programm arbeitet.

Wird das Mobilfunkgerät als herkömmliches Teilnehmerendgerät verwendet, so werden die vom DECT-Basisbandkontroller 31 bereitgestellten Daten vom Mikrokontroller nicht umgesetzt, sondern an die entsprechenden darunterliegenden Verarbeitungsstufen weitergeleitet. Entsprechend werden bei einer Verwendung des Mobilfunkgeräts als GSM-Telefon die vom GSM-Basiskontroller 33 bereitgestellten Signale von der Steuereinheit 34 nicht verarbeitet, sondern an die darunterliegenden Verarbeitungsstufen weitergeleitet.

## Patentansprüche

1. Mobilfunkgerät, das Einrichtungen aufweist, die ermöglichen, dass das Mobilfunkgerät wahlweise gemäß einem ersten Funksystem-Standard oder gemäß einem zweiten, davon unterschiedlichen Funksystem-Standard kommuniziert, **dadurch gekennzeichnet, dass** das Mobilfunkgerät in einen besonderen Betriebszustand geschaltet werden kann, bei dem ein Durchschaltemodul (25) den Signalverarbeitungspfad innerhalb des Mobilfunkgeräts für den ersten Funksystem-Standard mit dem Signalverarbeitungspfad innerhalb des Mobilfunkgeräts für den zweiten Funksystem-Standard koppelt, derart, dass während des besonderen Betriebszustandes eine Durchschleifung unter gleichzeitiger Signalumsetzung der Signale vom ersten Pfad zum zweiten Pfad erfolgt, derart, dass anstelle einer Umsetzung in Audiosignale innerhalb des Mobilfunkgeräts ein Umsetzungsbetrieb empfangener Signale gemäß dem ersten Standard in Signale gemäß dem zweiten Standard und Senden an einen Empfänger gemäß dem zweiten Standard erfolgt.

2. Mobilfunkgerät nach Anspruch 1, **dadurch gekennzeichnet, dass** Einrichtungen vorgesehen sind, die während des besonderen Betriebszustandes auch die Wandelung von empfangenen Signalen gemäß dem zweiten Standard in Signale gemäß dem ersten Standard sowie das Senden der Signale als Funksignale gemäß dem ersten Standard ermöglichen.

3. Mobilfunkgerät nach Anspruch 1 oder 2, **dadurch gekennzeichnet, dass** der erste Funkstandard der DECT-Standard ist und der zweite Funkstandard der GSM-Standard ist.

4. Mobilfunkgerät nach einem der Ansprüche 1 bis 3, **dadurch gekennzeichnet, dass** das Mobilfunkgerät ein Dual-Mode-Mobiltelefon ist.

5. Mobilfunkgerät nach einem der Ansprüche 1 bis 4, **dadurch gekennzeichnet, dass** das Durchschaltemodul den Pfad zur Verarbeitung der Funksignale gemäß dem ersten Standard mit dem Pfad zur Verarbeitung der Funksignale gemäß dem zweiten Standard auf sich entsprechenden Signalverarbeitungsstufen koppelt, die zumindest noch vor der Stufe liegen, in der eine Umsetzung empfangener Sprachdaten in Audiodaten beginnt.

6. Mobilfunkgerät nach einem der Ansprüche 1 bis 5, **dadurch gekennzeichnet, dass** das Mobilfunkgerät eine Einrichtung zum wahlweisen Umschalten zwischen Kommunikation gemäß dem ersten Standard auf Kommunikation gemäß dem zweiten Standard oder auf Kommunikation gemäß dem besonderen Betriebszustand aufweist.

7. Mobilfunkgerät nach Anspruch 6, **dadurch gekennzeichnet, dass** die Einrichtung zum Umschalten eine Schaltung aufweist, die im Falle des Nichtvorliegens des besonderen Betriebszustandes eine automatische Umschaltung auf den Standard ermöglicht, der dem vorhandenen Funksystem entspricht.

8. Mobilfunkgerät nach Anspruch 3, **dadurch gekennzeichnet, dass** die Einrichtung zum Ermöglichen des besonderen Betriebszustandes einen DECT-Basisbandkontroller, einen GSM-Basisbandkontroller und eine Steuereinheit mit Mikrokontroller aufweist, die über einen gemeinsamen Datenbus verbunden sind, wobei der Mikrokontroller im besonderen Betriebszustand Daten, die vom DECT-Basisbandkontroller zur Verfügung gestellt werden, in GSM-Signale umsetzt und an den GSM-Basisbandkontroller weiterleitet und GSM-Signale, die von dem GSM-Basisbandkontroller zur Verfügung gestellt werden, in DECT-Signale umsetzt und an den DECT-Baslsbandkontroller weiterleitet und im Falle einer ausschließlichen DECT-Kommunikation oder einer ausschließlichen GSM-Kommunikation, die von dem entsprechenden Kontroller bereitgestellten Daten an die nachfolgende Verarbeitungsstufe weiterleitet.

9. Mobilfunkgerät nach einem der Ansprüche 1 bis 8, **dadurch gekennzeichnet, dass** das Mobilfunkgerät sowohl Daten- als auch Sprachkommunikation ermöglicht.

10. Mobilfunkgerät nach einem der Ansprüche 1 bis 9, **dadurch gekennzeichnet, dass** das Funkgerät zwei Antennen aufweist, wobei eine erste Antenne der Sende/Empfangsfunktion im ersten Standard und die zweite Antenne der Sende/Empfangsfunktion im zweiten Standard zugeordnet ist.

11. Mobilfunkgerät nach einem der Ansprüche 1 bis 10, **dadurch gekennzeichnet, dass** die Einrichtung zum Ermöglichen des besonderen Betriebszustands einen Pufferspeicher zur Zwischenspeicherung der zu wandelnden Daten aufweist.

12. System zur drahtlosen Datenkommunikation mit
einer Computereinrichtung, aufweisend eine Sende/Empfangseinrichtung zum Durchführen einer drahtlosen Datenübertragung gemäß einem ersten Funkstandard, und
einem Mobilfunkgerät gemäß einem der Ansprüche 1 bis 11.

13. System nach Anspruch 12, **dadurch gekennzeichnet, dass** die Einrichtung zum Senden/Empfangen der Computereinrichtung im wesentlichen aus einer PCMCIA-Karte sowie einer in der Computereinrichtung gespeicherten Software besteht.

## Claims

1. Mobile radio device comprising means which enable that the mobile radio device selectively communicates in accordance with a first radio system standard or in accordance with a second radio system standard being different from the first standard, **characterized in that** the mobile radio device is switchable into a special operating mode, during which a switching through module (25) couples the signal processing path within the mobile radio device for the first radio system standard with the signal processing path within the mobile radio device for the second radio system standard, **in that** during the special mode signals of the first path are forwarded to the second path by simultaneously converting the signals, **in that** instead of converting the signals into audio signals within the mobile radio device, a conversion is made by which received signals of the first standard are converted into signals according to the second standard, which signals are transmitted to a receiver according to the second standard.

2. The mobile radio device according to claim 1, wherein said means in said special operating mode also enables the conversion of received signals in accordance with said second standard into signals in accordance with said first standard and the transmission of said signals as radio signals in accordance with said first standard.

3. The mobile radio device according to claim 1 or 2, wherein said first radio communication standard is the DECT standard and said second radio communication standard is the GSM standard.

4. The mobile radio device according to one of claims 1-3, wherein said mobile radio device is a dual-mode mobile phone.

5. The mobile radio device according to one of claims 1-4, wherein said switching through module couples the path for processing the radio signals in accordance with said first standard with the path for processing with the path for processing the radio signals in accordance with said second standard on signal processing stages corresponding to each other and being situated at least upstream of the stage at which the conversion of received voice data into audio data begins.

6. The mobile radio device according to one of claims 1-5, wherein said mobile radio device is provided with means for selectively switching between communication in accordance with said first standard and communication in accordance with said second standard or communication in accordance with the special operating mode.

7. The mobile radio device according to claim 6, wherein said means for switching has a circuit which in case of said special operating mode not being existent enables automatic switching to the standard corresponding to the existing radio communication system.

8. The mobile radio device according to claim 3, wherein said means enabling said special operating mode has a DECT baseband controller, a GSM baseband controller and a control unit with a microcontroller interconnected via a common data bus, wherein said microcontroller, in the special operating mode, converts data provided by said DECT baseband controller to GSM signals and transmits them to said GSM baseband controller and converts GSM signals provided by said GSM baseband controller into DECT signals and transmits them to said DECT baseband controller and in case of exclusive DECT communication or exclusive GSM communication transmits the data provided by the respective controller to the subsequent processing stage.

9. The mobile radio device according to one of claims 1-8, wherein said mobile radio telephone enables both, data and voice communication.

10. The mobile radio device according to one of claims 1-9, wherein said radio telephone has two antennas, the first antenna being assigned to transceiver functionality in accordance with said first standard and the second antenna being assigned to transceiver functionality in accordance with said second standard.

11. The mobile radio telephone according to one of claims 1-10, wherein said means enabling said special operating mode has a buffer memory for buffering data to be converted.

12. A system for wireless data transmission comprising,
a computer device having a transceiver means for conducting a wireless data transmission in accordance with a first radio standard and
a mobile radio device according to one of claims 1-11.

13. A system according to claim 12, wherein said first transceiver means of the computer device essentially comprises a PCMCIA-card and software stored in the computer device.

## Revendications

1. Appareil radio mobile comportant des dispositifs lui permettant de communiquer au choix selon une première norme radio ou selon une deuxième norme radio, différente de la première, **caractérisé en ce que** l'appareil radio mobile peut être commuté dans un état de fonctionnement particulier dans lequel un module d'interconnexion (25) couple le chemin à l'intérieur de l'appareil radio mobile, de traitement des signaux pour la première norme radio avec le chemin à l'intérieur de l'appareil radio mobile, de traitement des signaux pour la deuxième norme radio, de telle sorte que, pendant cet état de fonctionnement particulier, un bouclage ait lieu en même temps qu'une conversion des signaux du premier chemin vers le deuxième chemin, de telle sorte qu'au lieu d'une conversion en signaux audio à l'intérieur de l'appareil radio mobile, il se produise une conversion de signaux reçus selon la première norme en signaux selon la deuxième norme ainsi que l'émission vers un récepteur selon la deuxième norme.

2. Appareil radio mobile selon la revendication 1, **caractérisé en ce que** des dispositifs sont prévus, qui, pendant l'état de fonctionnement particulier, permettent aussi la transformation de signaux reçus selon la deuxième norme en signaux selon la première norme et l'émission de signaux selon la première norme en tant que signaux radio.

3. Appareil radio mobile selon la revendication 1 ou 2, **caractérisé en ce que** la première norme radio est la norme DECT et la deuxième norme radio est la norme GSM.

4. Appareil radio mobile selon l'une des revendications 1 à 3, **caractérisé en ce que** l'appareil radio mobile est un téléphone mobile bimode.

5. Appareil radio mobile selon l'une des revendications 1 à 4, **caractérisé en ce que** le module d'interconnexion couple le chemin de traitement des signaux radio selon la première norme avec le chemin de traitement des signaux radio selon la deuxième norme à des niveaux de traitement de signaux qui se correspondent et qui au minimum se trouvent en amont de l'étage auquel commence la conversion de données vocales reçues en données audio.

6. Appareil radio mobile selon l'une des revendications 1 à 5, **caractérisé en ce que** l'appareil radio mobile comporte un dispositif pour commuter au choix entre la communication selon la première norme et la communication selon la deuxième norme ou la communication selon l'état de fonctionnement particulier.

7. Appareil radio mobile selon la revendication 6, **caractérisé en ce que** le dispositif de commutation comporte un circuit qui permet, en cas d'absence de l'état de fonctionnement particulier, une commutation automatique vers la norme correspondant au système radio présent.

8. Appareil radio mobile selon la revendication 3, **caractérisé en ce que** le dispositif permettant d'obtenir l'état de fonctionnement particulier comporte un contrôleur en bande de base DECT, un contrôleur en bande de base GSM et une unité de commande avec microcontrôleur, reliés par un bus de données commun, dans lequel dans l'état de fonctionnement particulier, le microcontrôleur convertit en signaux GSM des données mises à disposition par le contrôleur en bande de base DECT et les transmet au contrôleur en bande de base GSM, et convertit en signaux DECT des signaux GSM mis à disposition par le contrôleur en bande de base GSM et les transmet au contrôleur en bande de base DECT et, dans lequel en cas de communication DECT exclusive ou de communication GSM exclusive, il transmet au niveau de traitement suivant les données mises à disposition par le contrôleur correspondant.

9. Appareil radio mobile selon l'une des revendications 1 à 8, **caractérisé en ce que** l'appareil radio mobile permet de communiquer aussi bien des données que de la voix.

10. Appareil radio mobile selon l'une des revendications 1 à 9, **caractérisé en ce que** l'appareil radio comporte deux antennes, une première antenne étant affectée à la fonction d'émission/réception selon la première norme et la deuxième antenne étant affectée à la fonction d'émission/réception selon la deuxième norme.

11. Appareil radio mobile selon l'une des revendications 1 à 10, **caractérisé en ce que** le dispositif permettant d'obtenir l'état de fonctionnement particulier comporte une mémoire tampon pour mémoriser de façon intermédiaire les données à transformer.

12. Système sans fil de transmission de données comportant un ordinateur ayant un dispositif d'émission/réception pour la transmission sans fil de données selon la première norme radio, et un appareil radio mobile selon l'une des revendications 1 à 11.

13. Système selon la revendication 12, **caractérisé en ce que** le dispositif d'émission/réception de l'ordinateur se compose essentiellement d'une carte PCMCIA ainsi que d'un logiciel installé dans une mémoire de l'ordinateur.
